# EUROPÄISCHE PATENTSCHRIFT

(11) **EP 2 767 721 B1**
(45) Veröffentlichungstag und Bekanntmachung des Hinweises auf die Patenterteilung: **10.10.2018**
(21) Anmeldenummer: 14000151.2
(22) Anmeldetag: 16.01.2014
(51) Int. Cl.: F16C 7/02, G01L 5/22, G01L 5/10

(54) **FASERVERBUND-FAHRWERKSLENKER**
FIBRE COMPOSITE STEERING ARM SYSTEM
BRAS DE SUSPENSION EN FIBRES COMPOSITES

(30) Priorität: 14.02.2013 DE 102013002585
(43) Veröffentlichungstag der Anmeldung: 20.08.2014
(73) Patentinhaber: AUDI AG, 85045 Ingolstadt (DE)
(72) Erfinder: Schindler, Sebastian, 85049 Ingolstadt (DE); Fessel, Guido, 85049 Ingolstadt (DE); Winter, Timo, 91790 Nennslingen (DE)

(56) Entgegenhaltungen:
- DE-T2- 69 836 028
- US-B1- 6 830 223

## Beschreibung

Die Erfindung betrifft einen Faserverbund-Fahrwerkslenker nach dem Oberbegriff des Hauptanspruches.

DE 698 36 028 T2 betrifft einen Faserverbund-Fahrwerkslenker für ein Kraftfahrzeug umfassend mindestens zwei metallische Lageraufnahmen für verschiedene Lagerungselemente und ein dazwischen angeordnetes Verbindungsteil aus faserverstärktem Kunststoff, das mit Klebeverbindungen an entsprechenden Wellenabsätzen der Lagerungselemente befestigt ist. Das Verbindungsbauteil wird durch einen Wickel- oder Flechtprozess mit vorimprägnierten Fasern eines Harzsystems um die Lageraufnahmen ausgebildet. Die Bauweise des patentierten Hybridlenkers ist nur schwer automatisierbar. Eine Überwachung auf Fehlerfreiheit dieses Fahrwerklenkers ist nicht vorgesehen.

Stand der Technik ist die Erfassung von im Fahrwerkslenker auftretenden Kräften, aber nicht die Detektion von tatsächlich aufgetretenen Versagenserscheinungen aufgrund von Risse oder dergleichen und Fehler in der Fertigung der Fahrwerkslenkerle. Bei Fahrwerkslenker aus faserverstärkten Kunststoffen kommt noch nachteilig hinzu, dass sich eine Versagenserscheinung außer bei Bruch durch Überbeanspruchung nicht frühzeitig feststellen lässt. Außerdem können Versagenserscheinungen unabhängig von den auftretenden Kräften, durch beispielsweise einen nicht korrekt ausgeführten Fertigungsprozess auftreten.

Aufgabe der Erfindung ist es, Versagenserscheinungen unterschiedlicher Art an Fahrwerkslenker frühzeitig feststellen zu können, ohne auf die im Einsatz auftretenden Kräfte Bezug nehmen zu müssen.

Dazu ist der erfindungsgemäße Fahrwerkslenker für ein Kraftfahrzeug umfassend zwei metallische Lageraufnahmen für verschiedene Lagerungselemente und ein dazwischen angeordnetes Verbindungsbauteil aus faserverstärktem Kunststoff , das mit Klebeverbindungen an entsprechenden Wellenabsätzen der Lagerungselemente befestigt ist, dadurch gekennzeichnet, dass der Innenraum des Verbindungsbauteiles durch die beiden Klebeverbindungen zwischen den Lageraufnahmen und dem Verbindungsbauteil luftdicht abgeschlossen ist, und dass in dem Innenraum ein Drucksensor zur Erfassung des Innendrucks in dem Innenraum angeordnet ist, der ein von dem Innendruck abhängiges Signal drahtlos oder drahtgebunden an eine Steuereinheit abgibt.

Bei der Erfindung kann eine Detektion von Rissen oder einem Bruch durch die Erfassung einer Druckdifferenz innerhalb des luftdicht abgeschlossenen Verbindungsbauteiles festgestellt werden. Durch die Druckerfassung ist eine kontinuierliche Überwachung des Fahrwerkslenkers und Feststellung des Bruches möglich, auch wenn dieser unterhalb der bekannten Belastungsobergrenze aufgetreten ist.

Das im Hohlraum eingeschlossene Fluid zeigt bei steigender oder fallender Umgebungstemperatur sind entsprechend langsam über ein sehr langes Zeitintervall verändernde Werte des Innendrucks in dem Verbindungsbauteil. Im Vergleich dazu kommt es bei einem Bruch oder Riss zu einem großen Druckabfall in einem kurzen Zeitintervall. Dieser abrupte Druckabfall wird erfindungsgemäß zur Fehlererkennung genutzt. Vorteilhafte Ausgestaltungen des erfindungsgemäßen Fahrwerkslenkers sind dadurch gekennzeichnet, dass der Drucksensor mit dem Wellenabsatz von einem der Lageraufnahmen verbunden ist, oder dass der Drucksensor mit dem Verbindungsrohr verbunden ist. Dadurch ist in vorteilhafter Weise eine vorherige Montage des Drucksensors an einem Bauteil des Fahrwerklenkers möglich, was den Zusammenbau des Fahrwerklenkers mit dem integrierten Drucksensor erleichtert.

Eine weitere vorteilhafte Ausgestaltung des erfindungsgemäßen Fahrwerkslenkers ist dadurch gekennzeichnet, dass der Drucksensor in ein in dem Kraftfahrzeug vorhandenes Druckerfassungssystem integriert ist. Zur Verwirklichung der erfindungsgemäßen Anordnung ist damit nur ein zusätzlicher Drucksensor erforderlich, während die übrigen Teile des Druckerfassungssystems von dem bereits vorhandenen Druckerfassungssystem für die Erfassung der Reifendruckwerte durch entsprechende Drucksensoren in dem Innenraum der Reifen ausgenutzt wird, um die Signale von den Drucksensoren für den Druck in den Fahrwerklenkern zu erfassen und auszuwerten. Damit kann die Aufgabenstellung mit einem minimalen Bauaufwand gelöst werden.

Zur Lösung der Aufgabe dient auch ein Verfahren zur Herstellung eines Fahrwerkslenkers für ein Kraftfahrzeug umfassend:Bereitstellen von zwei Lageraufnahmen für verschiedene Lagerungselemente, Bereitstellen von einem Verbindungsbauteil aus faserverstärktem Kunststoff , Befestigen eines Drucksensors an einem Wellenabsatz von einer der Lageraufnahmen oder an dem Verbindungsbauteil in dessen Innenraum zur Erfassung des Innendrucks in dem Innenraum, Aufbringen eines Klebemittels an den Wellenabsätzen der Lageraufnahmen, Einlegen und Ausrichten der Lageraufnahmen und des Verbindungsbauteiles in einer Fertigungsvorrichtung, Ineinander Verbringen der Lageraufnahmen und des Verbindungsbauteiles durch die Fertigungsvorrichtung, wodurch der Innenraum des Verbindungsbauteiles durch die beiden Klebeverbindungen zwischen den Lageraufnahmen und dem Verbindungsbauteil luftdicht abgeschlossen wird, und Überwachen des Innendrucks und Übertragen eines vom Innendruck abhängigen Signals in bzw. an einer Steuereinheit. Durch dieses Verfahren kann der Herstellungsprozess für die Fahrwerkslenker in hohem Maße automatisiert werden. Es müssten lediglich die vorbereiteten Bestandteile ineinander geschoben werden, so dass die Lageraufnahmen mit dem Verbindungsbauteil verbunden werden. Außerdem ist dieses Herstellungsverfahren in hohem Maße reproduzierbar, und die Verklebung der Lageraufnahmen mit dem Verbindungsbauteil kann zerstörungsfrei während des Geberprozesses durch den Drucksensor überwacht werden.

Eine vorteilhafte Ausgestaltung der erfindungsgemäßen Verfahrens ist dadurch gekennzeichnet, dass beim ineinander Verbringen der Lageraufnahmen und des Verbindungsbauteiles durch die Fertigungsvorrichtung ein erhöhter Innendruck in dem Verbindungsbauteil erzeugt wird, und dass das vom Innendruck abhängigen Signal bei dem ineinander Verbringen der Lageraufnahmen und des Verbindungsbauteiles überwacht und drahtlos oder drahtgebunden übertragen wird. Durch den Fertigungsprozess entsteht ein Überdruck im Faserverbund-Fahrwerkslenker, sodass auch eine Überprüfung des Klebeprozesses in der Fertigung durch den integrierten Drucksensor ermöglicht wird.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugzeichen verwendeten Begriffe und zugeordneten Bezugzeichen verwendet. In den Zeichnungen bedeutet:

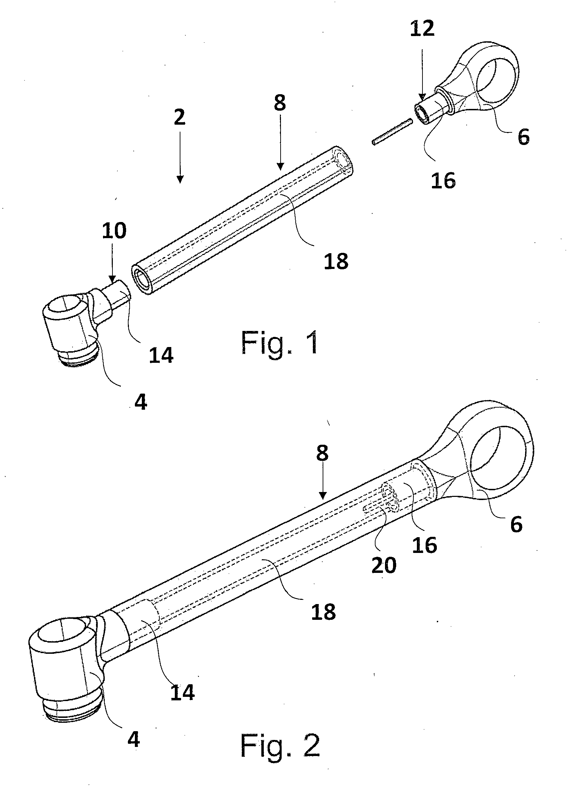

Fig. 1 eine Explosionsansicht des erfindungsgemäßen Fahrwerklenkers; und
Fig. 2 eine perspektivische Ansicht des erfindungsgemäßen Fahrwerklenkers.

Ein Fahrwerkslenker 2 für ein Kraftfahrzeug nach einem Ausführungsbeispiel der Erfindung umfassend zwei metallische Lageraufnahmen 4, 6 für verschiedene Lagerungselemente wie eine Kugelzapfenaufnahme (Lageraufnahme 4) und eine Gummilageraufnahme (Lageraufnahme 6) und ein dazwischen angeordnetes Verbindungsbauteil 8 aus faserverstärktem Kunststoff CFK, das mit Klebeverbindungen an entsprechenden Wellenabsätzen 14, 16 der Lageraufnahmen befestigt ist. Die Klebeverbindungen werden durch Klebeflächen 10, 12 aus einem Klebemittel gebildet, die auf den Wellenabsätzen 14, 16 der Lageraufnahmen 4, 6 aufgebracht sind und beim Zusammenfügen des Verbindungsbauteiles 8 und den Lageraufnahmen 4, 6 die Verbindung zu den Wellenabsätzen 14, 16 der Lageraufnahmen 4, 6 herstellen. Das Verbindungsbauteil kann einen kreisrunden Querschnitt aufweist, oder es kann aus einem Mehrkantprofil ausgebildet sein.

Ein Innenraum 18 des Verbindungsbauteiles 8 wird durch die beiden Klebeverbindungen durch die Klebeflächen 10, 12 zwischen den Lageraufnahmen 4, 6 und dem Verbindungsbauteil 8 luftdicht abgeschlossen. In dem Innenraum 18 ist ein Drucksensor 20 zur Erfassung des Innendrucks in dem Innenraum 18 angeordnet, der ein von dem Innendruck abhängiges Signal drahtlos an eine Steuereinheit abgibt. Der Drucksensor 20 ist mit dem Wellenabsatz 14 oder mit dem Wellenabsatz 16 von der Lageraufnahmen 4 bzw. der Lageraufnahmen 6 verbunden. Alternativ kann der Drucksensor 20 mit dem Verbindungsrohr 8 verbunden sein.

Der Drucksensor 20 kann in ein in dem Kraftfahrzeug vorhandenes Druckerfassungssystem integriert sein. Es gibt bekanntlich Systeme, um den Reifendruck berührungslos durch Drucksensoren zu überwachen, die in dem Innenraum der Reifen der Fahrzeugräder angeordnet sind und ein dem Druck entsprechendes Drucksignal drahtlos an eine Auswertungseinheit abgeben können. Dabei sind die Reifendrucksensoren in der Regel in dem Reifenventil angeordnet, und sie senden die Drucksignale per Funk an einen Empfänger im Radkasten, der dann mit der Auswertungseinheit verbunden ist. Die Drucksensoren, die bei dem erfindungsgemäßen Fahrzeuglenker verwendet werden, können im Prinzip so ausgeführt sein, wie die bekannten Drucksensoren für den Innendruck von Fahrzeugreifen. Es müssen daher keine speziellen Drucksensoren entwickelt und gebaut werden, um den Innendruck in den Fahrwerklenkern zu überwachen.

Eine Ausführung des erfindungsgemäßen Verfahrens zur Herstellung eines Fahrwerkslenkers 2 für ein Kraftfahrzeug umfasst folgende Schritte:
a) Bereitstellen von zwei Lageraufnahmen 4, 6 für verschiedene Lagerungselemente,
b) Bereitstellen von einem Verbindungsbauteil 8 aus faserverstärktem Kunststoff CFK,
c) Befestigen eines Drucksensors 20an einem Wellenabsatz von einem der Lageraufnahmen 4, 6 oder an dem Verbindungsbauteil 8 in dessen Innenraum 18 zur Erfassung des Innendrucks in dem Innenraum 18,
d) Aufbringen eines Klebemittels an den Wellenabsätzen 14, 16 der Lageraufnahmen, und
e) Einlegen und Ausrichten der Lageraufnahmen und des Verbindungsbauteiles 8 in einer Fertigungsvorrichtung,
f) Ineinander Verbringen der Lageraufnahmen 4, 6 und des Verbindungsbauteiles 8 durch die Fertigungsvorrichtung und
g) Erzeugen von Klebeverbindungen mit Hilfe von Klebeflächen 10, 12 zwischen dem Verbindungsbauteil 8 und den Lageraufnamen 4, 6.

Bei diesem Verfahren wird der Innenraum 18 des Verbindungsbauteiles 8 durch die beiden Klebeverbindungen zwischen den Lageraufnahmen 4, 6 und dem Verbindungsbauteil 8 luftdicht abgeschlossen, und der Innendruck kann kontinuierlich überwacht werden, indem ein vom Innendruck abhängiges Signal drahtlos an eine Steuereinheit übertragen wird.

Bei dem Verfahren wird beim Ineinander Verbringen der Lageraufnahmen 4, 6 und des Verbindungsbauteiles 8 durch die Fertigungsvorrichtung ein erhöhter Innendruck in dem Verbindungsbauteil 8 erzeugt, und das vom Innendruck abhängigen Signal bei dem ineinander Verbringen der Lageraufnahmen 4, 6 und des Verbindungsbauteiles 8 kann drahtlos übertragen und überwacht werden. Bei dem erfindungsgemäßen Verfahren erfolgt die Rissdetektion dadurch, dass ein Druckabfall innerhalb eines sehr kleinen Zeitintervalls detektiert wird.

Bei der Herstellung des Fahrwerkslenkers werden daher einfach die Lageraufnahmen 4, 6 mit den Wellenabsätzen 14, 16 auf das Verbindungsbauteil aufgeschoben wobei der Sensor in dem Innenraum angeordnet wird.

### Bezugszeichenliste

- 2: Fahrwerkslenker
- 4, 6: Lageraufnahmen
- 8: Verbindungsbauteil
- 10, 12: Klebeflächen
- 14, 16: Wellenabsätze
- 18: Innenraum
- 20: Drucksensor

## Patentansprüche

1. Fahrwerkslenker (2) für ein Kraftfahrzeug umfassend mindestens zwei Lageraufnahmen (4, 6) für verschiedene Lagerungselemente und ein dazwischen angeordnetes Verbindungsbauteil (8) aus faserverstärktem Kunststoff , das mit Klebeverbindungen an entsprechenden Wellenabsätzen (14, 16) der Lageraufnahmen befestigt ist,
**dadurch gekennzeichnet, dass**
ein Innenraum (18) des Verbindungsbauteiles (8) durch die beiden Klebeverbindungen zwischen den Lageraufnahmen (4, 6) und dem Verbindungsbauteil (8) luftdicht abgeschlossen ist, und dass
in dem Innenraum (18) ein Drucksensor (20) zur Erfassung des Innendrucks in dem Innenraum (18) angeordnet ist, der ein von dem Innendruck abhängiges Signal an eine Steuereinheit abgibt.

2. Fahrwerkslenker (2) nach Anspruch 1, **dadurch gekennzeichnet, dass** der Drucksensor (20) mit dem Wellenabsatz (14 oder 16) von einer der Lageraufnahmen (4 bzw. 6)verbunden ist.

3. Fahrwerkslenker (2) nach Anspruch 1, **dadurch gekennzeichnet, dass** der Drucksensor (20) mit dem Verbindungsrohr als Verbindungsbauteil (8) verbunden ist.

4. Fahrwerkslenker (2) nach Anspruch 1, **dadurch gekennzeichnet, dass** der Drucksensor (20) in ein in dem Kraftfahrzeug vorhandenes Druckerfassungssystem integriert ist.

5. Fahrwerkslenker (2) nach Anspruch 1, **dadurch gekennzeichnet, dass** das Verbindungsbauteil einen kreisrunden Querschnitt aufweist

6. Fahrwerkslenker (2) nach Anspruch 1, **dadurch gekennzeichnet, dass** das Verbindungsbauteil aus einem Mehrkantprofil ausgebildet ist

7. Verfahren zur Herstellung eines Fahrwerkslenkers (2) für ein Kraftfahrzeug nach Anspruch 2 oder 3 umfassend:
Bereitstellen von zwei Lageraufnahmen (4, 6) für verschiedene Lagerungselemente,
Bereitstellen von einem Verbindungsbauteil (8) aus faserverstärktem Kunststoff ,
Befestigen eines Drucksensors (20)an einem Wellenabsatz von einem der Lageraufnahmen (4, 6) oder an dem Verbindungsbauteil (8) in dessen Innenraum (18) zur Erfassung des Innendrucks in dem Innenraum (18),
Aufbringen eines Klebemittels an den Wellenabsätzen (14, 16) der Lageraufnahmen,
Einlegen und Ausrichten der Lageraufnahmen und des Verbindungsbauteiles (8) in einer Fertigungsvorrichtung, Ineinander Verbringen der Lageraufnahmen (4, 6) und des Verbindungsbauteiles (8) durch die Fertigungsvorrichtung und Erzeugen von Klebeverbindungen zwischen dem Verbindungsbauteil (8) und den Lageraufnamen (4, 6),
wodurch der Innenraum (18) des Verbindungsbauteiles (8) durch die beiden Klebeverbindungen zwischen den Lageraufnahmen (4, 6)und dem Verbindungsbauteil (8) luftdicht abgeschlossen wird, und
Überwachen des Innendrucks und Übertragen eines vom Innendruck abhängigen Signals in bzw. an einer Steuereinheit.

8. Verfahren nach Anspruch 7, **dadurch gekennzeichnet, dass** beim Ineinander Verbringen der Lageraufnahmen (4, 6) und des Verbindungsbauteiles (8) durch die Fertigungsvorrichtung ein erhöhter Innendruck in dem Verbindungsbauteil (8) erzeugt wird, und dass das vom Innendruck abhängigen Signal bei dem ineinander Verbringen der Lageraufnahmen (4, 6) und des Verbindungsbauteiles (8) überwacht und drahtlos übertragen wird.

9. Verfahren nach Anspruch 7 oder 8, **dadurch gekennzeichnet, dass** ein in dem Kraftfahrzeug vorhandenes Druckerfassungssystem zur Überwachung des Innendrucksignals verwendet wird.

10. Verfahren nach Anspruch 9, **dadurch gekennzeichnet, dass** die Rissdetektion durch einen Druckabfall innerhalb eines sehr kleinen Zeitintervalls detektiert wird.

## Claims

1. Chassis link (2) for a motor vehicle comprising at least two bearing retainers (4, 6) for different bearing elements and a connection component (8) arranged therebetween made of fibre-reinforced plastic, which is fastened to corresponding shaft shoulders (14, 16) of the bearing retainers with adhesive bonds, **characterised in that** an interior (18) of the connection component (8) is closed in an air-tight manner by the two adhesive bonds between the bearing retainers (4, 6) and the connection component (8) and **in that** a pressure sensor (20) is arranged in the interior (18) to detect the interior pressure in the interior (18) which emits a signal dependent on the interior pressure to a control unit.

2. Chassis link (2) according to claim 1, **characterised in that** the pressure sensor (20) is connected to the shaft shoulder (14 or 16) by one of the bearing retainers (4 or 6).

3. Chassis link (2) according to claim 1, **characterised in that** the pressure sensor (20) is connected to the connection tube as a connection component (8).

4. Chassis link (2) according to claim 1, **characterised in that** the pressure sensor (20) is integrated into a pressure detection system present in the motor vehicle.

5. Chassis link (2) according to claim 1, **characterised in that** the connection component has a circular cross section.

6. Chassis link (2) according to claim 1, **characterised in that** the connection component is formed from a multi-edge profile.

7. Method for producing a chassis link (2) for a motor vehicle according to claim 2 or 3 comprising:
providing two bearing retainers (4, 6) for different bearing elements,
providing a connection component (8) made of fibre-reinforced plastic,
fastening a pressure sensor (20) to a shaft shoulder of one of the bearing retainers (4, 6) or to the connection component (8) in its interior (18) to detect the interior pressure in the interior (18),
applying an adhesive to the shaft shoulders (14, 16) of the bearing retainers,
inserting and aligning the bearing retainers and the connection component (8) in a manufacturing device, passing the bearing retainers (4, 6) and the connection component (8) into one another by way of the manufacturing device and generating adhesive bonds between the connection component (8) and the bearing retainers (4, 6),
whereby the interior (18) of the connection component (8) is closed in an air-tight manner by the two adhesive bonds between the bearing retainers (4, 6) and the connection component (8) and
monitoring the interior pressure and transferring a signal dependent on the interior pressure in or to a control unit.

8. Method according to claim 7, **characterised in that** when the bearing retainers (4, 6) and the connection component (8) are inserted into one another by the manufacturing device, an increased interior pressure is generated in the connection component (8), and **in that** the signal dependent on the interior pressure is monitored when the bearing retainers (4, 6) and the connection component (8) are inserted into one another and is transferred wirelessly.

9. Method according to claim 7 or 8, **characterised in that** a pressure detection system present in the motor vehicle is used to monitor the interior pressure signal.

10. Method according to claim 9, **characterised in that** the crack detection is detected by a pressure drop within a very short time interval.

## Revendications

1. Bras de suspension (2) pour un véhicule automobile comprenant au moins deux logements de palier (4, 6) pour différents éléments palier et un composant de liaison (8) agencé entre en plastique renforcé par des fibres, qui est fixé avec des liaisons collées au niveau d'épaulements d'arbre (14, 16) correspondants des logements de palier,
**caractérisé en ce que**
un intérieur (18) du composant de liaison (8) est fermé de manière étanche à l'air par les deux liaisons collées entre les logements de palier (4, 6) et le composant de liaison (8), et qu'un capteur de pression (20) pour la détection de la pression intérieure dans l'intérieur (18), qui émet un signal dépendant de la pression intérieure à une unité de commande, est agencé dans l'intérieur (18).

2. Bras de suspension (2) selon la revendication 1, **caractérisé en ce que** le capteur de pression (20) est relié à l'épaulement d'arbre (14 ou 16) par un des logements de palier (4 ou 6).

3. Bras de suspension (2) selon la revendication 1, **caractérisé en ce que** le capteur de pression (20) est relié au tube de liaison en tant que composant de liaison (8).

4. Bras de suspension (2) selon la revendication 1, **caractérisé en ce que** le capteur de pression (20) est intégré dans un système de détection de pression présent dans le véhicule automobile.

5. Bras de suspension (2) selon la revendication 1, **caractérisé en ce que** le composant de liaison présente une section transversale circulaire.

6. Bras de suspension (2) selon la revendication 1, **caractérisé en ce que** le composant de liaison est réalisé en un profil polygonal.

7. Procédé de fabrication d'un bras de suspension (2) pour un véhicule selon la revendication 2 ou 3 comprenant :
la mise à disposition de deux logements de palier (4, 6) pour différents éléments palier,
la mise à disposition d'un composant de liaison (8) en plastique renforcé par fibres,
la fixation d'un capteur de pression (20) au niveau d'un épaulement d'arbre d'un des logements de palier (4, 6) ou au niveau du composant de liaison (8) dans son intérieur (18) pour la détection de la pression intérieure dans l'intérieur (18),
l'application d'un adhésif au niveau des épaulements d'arbre (14, 16) des logements de palier,
l'insertion et l'orientation des logements de palier et du composant de liaison (8) dans un dispositif de fabrication, la mise en prise l'un dans l'autre des logements de palier (4, 6) et du composant de liaison (8) par le dispositif de fabrication et la génération de liaisons adhésives entre le composant de liaison (8) et les logements de palier (4, 6),
dans lequel l'intérieur (18) du composant de liaison (8) est fermé étanche à l'air par les deux liaisons adhésives entre les logements de palier (4, 6) et le composant de liaison (8), et
la surveillance de la pression intérieure et la transmission d'un signal dépendant de la pression intérieure dans ou au niveau d'une unité de commande.

8. Procédé selon la revendication 7, **caractérisé en ce que** lors de la mise en prise l'un dans l'autre des logements de palier (4, 6) et du composant de liaison (8) par le dispositif de fabrication, une pression intérieure accrue est générée dans le composant de liaison (8), et que le signal dépendant de la pression intérieure est surveillé lors de la mise en prise l'un dans l'autre des logements de palier (4, 6) et du composant de liaison (8) et transmis sans fil.

9. Procédé selon la revendication 7 ou 8, **caractérisé en ce qu'**un système de détection de pression présent dans le véhicule est utilisé pour la surveillance du signal de pression intérieure.

10. Procédé selon la revendication 9, **caractérisé en ce que** la détection des fissures est détectée par une chute de pression à l'intérieur d'un très petit intervalle de temps.
